# EUROPÄISCHE PATENTSCHRIFT

(11) **EP 3 861 305 B1**
(45) Veröffentlichungstag und Bekanntmachung des Hinweises auf die Patenterteilung: **31.05.2023**
(21) Anmeldenummer: 19766210.9
(22) Anmeldetag: 05.09.2019
(51) Int. Cl.: G01F 23/284

(54) **VERFAHREN ZUR FÜLLSTANDSMESSUNG**
METHOD OF FILLING-LEVEL MEASUREMENT
PROCÉDÉ DE MESURE DE NIVEAU DE REMPLISSAGE

(30) Priorität: 05.10.2018 DE 102018124606
(43) Veröffentlichungstag der Anmeldung: 11.08.2021
(73) Patentinhaber: Endress+Hauser SE+Co. KG, 79689 Maulburg (DE)
(72) Erfinder: MALINOVSKIY, Alexey, 79689 Maulburg (DE); GRETH, Simon, 79541 Lörrach (DE); ROSER, Carmen, 79585 Steinen (DE); KLUTE, Lukas, 79576 Weil am Rhein (DE)
(74) Vertreter: Koslowski, Christine Adelheid
(86) Internationale Anmeldenummer: PCT/EP2019/073730
(87) Internationale Veröffentlichungsnummer: WO 2020/069813

(56) Entgegenhaltungen:
- EP-A1- 2 372 388
- US-A1- 2012 174 664

## Beschreibung

Die Erfindung betrifft ein Verfahren zur Füllstandsmessung eines in einem Behälter befindlichen Füllgutes sowie ein Füllstandsmessgerät zur Ausführung dieses Verfahrens.

In der Prozessautomatisierungstechnik werden allgemein Feldgeräte eingesetzt, die zur Erfassung oder zur Beeinflussung von Prozessvariablen dienen. Hierzu basiert die Funktionsweise der Feldgeräte auf jeweils geeigneten Messprinzipien, um die entsprechenden Prozessvariablen, wie Füllstand, Durchfluss, Druck, Temperatur, pH-Wert, Redoxpotential oder Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich Radar-basierte Messverfahren etabliert, da sie robust und wartungsarm sind. Dabei werden unter dem Begriff *"Behälter"* im Rahmen der Erfindung auch nicht-abgeschlossene Behältnisse, wie beispielsweise Becken, Seen oder fließende Gewässer verstanden. Ein zentraler Vorteil Radar-basierter Messverfahren besteht in der Fähigkeit, den Füllstand quasi kontinuierlich messen zu können. Im Kontext dieser Patentanmeldung bezieht sich der Begriff *"Radar"* auf Signale bzw. elektromagnetische Wellen mit Frequenzen zwischen 0.03 GHz und 300 GHz. Übliche Frequenzbänder, bei denen Füllstandsmessung durchgeführt wird, liegen bei 2 GHz, 6 GHz, 26 GHz oder 79 GHz.

Im Fall von Radar-basierter Füllstandsmessung bildet das Pulslaufzeit-Prinzip ein etabliertes Messprinzip. Hierbei werden pulsförmige Mikrowellensignale zyklisch in Richtung des Füllguts ausgesandt und die Laufzeit bis zum Empfang des entsprechenden pulsförmigen Empfangssignals gemessen. Auf Basis dieses Messprinzips können Füllstandsmessgeräte mit vergleichsweise geringem schaltungstechnischem Aufwand realisiert werden. Ein Radar-basiertes Füllstandsmessgerät, welches nach dem Pulslaufzeit-Verfahren arbeitet, ist beispielsweise in der Offenlegungsschrift DE 10 2012 104 858 A1 beschrieben.

Sofern eine komplexere Schaltungstechnik in Kauf genommen werden kann, bietet sich zur Radar-basierten Füllstandsmessung auch FMCW *("Frequency Modulated Continuous Wave"*) als Messprinzip an. Bezüglich eines typischen Aufbaus von FMCW-basierten Füllstandsmessgeräten sei exemplarisch auf die Offenlegungsschrift DE 10 2013 108 490 A1 verwiesen.

Das Messprinzip von FMCW- Radar basierten Entfernungsmessverfahren beruht darauf, das Mikrowellensignal zwar kontinuierlich, jedoch mit modulierter Frequenz auszusenden. Dabei liegt die Frequenz des Mikrowellensignals in einem festgelegten Frequenzband im Bereich einer standarisierten Mittenfrequenz. Kennzeichnend für FMCW ist hierbei, dass die Sende-Frequenz nicht konstant ist, sondern sich periodisch innerhalb des festgelegten Frequenzbandes ändert. Bei einer Mittenfrequenz von 79 GHz beträgt das Frequenzband beispielsweise 2 GHz, also von 78 GHz bis 80 GHz. Auch bei FMCW wird das Aussenden bzw. Empfangen der Mikrowellensignale in aufeinanderfolgende Messzyklen gegliedert.

Die zeitliche Änderung ist der Frequenz ist bei FMCW standardmäßig linear und weist eine Sägezahn- beziehungsweise Dreiecks-Form auf. Eine Sinus-förmige Änderung kann prinzipiell jedoch auch eingesetzt werden. Im Gegensatz zum Pulslaufzeit-Verfahren wird die Entfernung bzw. der Füllstand bei Implementierung des FMCW-Verfahrens auf Basis der instantanen Frequenzdifferenz zwischen dem aktuellen Empfangssignal und dem momentan ausgesendeten Mikrowellensignal bestimmt.

Bei beiden der oben genannten Messprinzipien wird zur Ermittlung des Füllstandes anhand des Empfangssignals eine entsprechende Auswertungskurve aufgezeichnet. Im Falle des Pulsradar-basierten Verfahrens wird die Auswertungskurve aufgrund der hohen Pulsfrequenz durch Unterabtastung des reflektierten Empfangssignals erstellt. Dadurch bildet die Auswertungskurve das eigentliche, reflektierte Empfangssignal zeitgedehnt ab. Bei Implementierung des FMCW-Verfahrens wird die Auswertungskurve durch Mischen des momentan gesendeten Mikrowellensignals mit dem reflektierten Empfangssignal erstellt. Auch hier wird durch das Mischen die Auswertungskurve in ihrer Zeitachse gedehnt. Unabhängig vom Messprinzip spiegelt die Auswertungskurve die Amplitude des reflektierten Empfangssignals in Abhängigkeit der Messdistanz wieder.

Der Füllstand wird aus der Auswertungskurve durch Detektion und örtlicher Zuweisung des entsprechenden lokalen Maximums bestimmt. Im Idealfall existiert neben dem Maximum, dass durch die Füllgut-Oberfläche erzeugt ist, kein weiteres Maximum. Bedingt durch weitere reflektierende Oberflächen im Behälter-Inneren erscheinen neben dem Füllstands-Maximum in der Auswertungskurve in der Praxis jedoch weitere Maxima an entsprechenden Orten der Auswertungskurve. Für die Füllstandsmessung ist allein das Maximum, das durch die Füllgut-Oberfläche erzeugt wird, relevant. Weitere Informationen in der Auswertungskurve werden daher in der Praxis herausgefiltert, um die Füllstandsmessung verlässlicher zu machen. Die Filterung kann dabei auf verschiedene Arte erfolgen.

Zum einen kann die Auswertungskurve mittels eines geeigneten Filterverfahrens wie Mittelwert-, Maximalwert- oder Tiefpassfilterung zu glätten, um im Anschluss den Füllstand anhand der geglätteten Auswertungskurve bestimmen zu können. Dabei bietet eine geringe Glättung den Vorteil, dass die Maxima örtlich besser aufgelöst werden können. Hierdurch lässt sich der Füllstand genauer bestimmen. Dies wird durch eine stärkere Glättung eingeschränkt. Allerdings sinkt durch eine stärkere Glättung die Fehler- bzw. Störanfälligkeit der Füllstandsmessung.

Zum anderen kann bei leerem Behälter oder unter Kalibrier-Bedingungen, wie möglichst kompletter Absorption des Sendesignals, eine Referenzkurve erstellt werden. Dabei wird die aktuelle Auswertungskurve mittels Differenzbildung mit der hinterlegten Referenzkurve verglichen. Im Anschluss wird das zur Füllgut-Oberfläche korrespondierende Maximum anhand der resultierenden Differenzkurve bestimmt. Hierdurch werden vor allem statische Störechos, wie "Klingeln" des Füllstandsmessgerätes im Antennenbereich oder Statische Einbauten im Behälter ausgeblendet. Allerdings werden nicht-statische Störechos, wie es zum Beispiel durch rotierende Rührwerke oder allmähliche Ansatzbildung im Behälter, hierdurch nicht erfasst. Daher besteht vor allem nach längerem Betrieb die Gefahr, dass durch solche Störechos vom Füllstandsmessgerät ein falscher Füllstandswert ermittelt wird.

Die US 2012/174664 A1 spezifiziert ein Verfahren zur Radar-basierten Messung eines Füllstandes eines Füllgutes, welches innerhalb eines Messbereichs in einem Behälter vorliegt, bei dem zyklisch eine im gesamten Bereich der Messung eine gemessene Echokurve auf Plausibilität überprüft wird.

Der Erfindung liegt daher die Aufgabe zugrunde, ein Füllstandsmessgerät bereitzustellen, mit dem der Füllstand zuverlässiger bestimmbar ist.

Die Erfindung löst diese Aufgabe durch ein Verfahren zur Radar-basierten Messung eines Füllstandes eines Füllgutes, welches innerhalb eines Messbereichs in einem Behälter vorliegt. Dabei ist innerhalb des Messbereichs ein initialer Auswahlbereich definiert, der vorzugsweise zunächst über den gesamten Messbereich definiert ist. Darauf basierend umfasst das Verfahren folgende Verfahrensschritte, die in aufeinanderfolgenden Messzyklen wiederholt werden:
- Aussenden eines Mikrowellensignals in Richtung des Füllgutes,
- Empfang eines Empfangssignals nach Reflektion des Mikrowellensignals im Inneren des Behälters,
- Erstellung einer Auswertungskurve anhand von zumindest dem Empfangssignal,
- Bildung einer Differenzkurve anhand der Auswertungskurve und einer vordefinierten Referenzkurve,
- Bestimmung des Füllstandes anhand der Auswertungskurve oder anhand der Differenzkurve innerhalb des Auswahlbereichs,
- Prüfen, ob die Differenzkurve an zumindest einem Ort ein vordefiniertes Kriterium erfüllt,
- Neufestsetzung des Auswahlbereichs an dem Ort, an dem das Kriterium erfüllt ist, für den anschließenden Messzyklus, sofern die Differenzkurve an dem zumindest einen Ort das vordefinierte Kriterium erfüllt, und
- Festlegung der Auswertungskurve als neue Referenzkurve für den anschließenden Messzyklus, sofern die Differenzkurve an dem zumindest einen Ort das vordefinierte Kriterium erfüllt.

Durch das erfindungsgemäße Verfahren bietet sich der Vorteil, dass der Suchbereich des Füllstands-Maximums in der Auswertungskurve einerseits eingegrenzt werden kann. Dennoch können vor allem nicht-statische Störechos, die sich nur langsam verändern, erkannt werden, so dass die Füllstandsmessung hierdurch sicherer wird.

Da die Prüfung des Kriteriums hinsichtlich der Differenzkurve erfolgt, also hinsichtlich einer diskreten Anzahl an Wertepaaren oder einer mathematischen Funktion, ist der Begriff *"Kriterium"* im mathematischen Sinne zu verstehen. Dementsprechend kann als Kriterium im Rahmen der Erfindung beispielsweise das Überschreiten einer vordefinierten Amplitude bzw. eines bestimmten Wertes, einer Steigung oder einer Unstetigkeit in der Differenzkurve als Kriterium, auf das die Differenzkurve geprüft wird, herangezogen werden.

Die erstmalige Definition der Referenzkurve ist erfindungsgemäß nicht fest vorgeschrieben, sie kann vom konkreten Einsatzgebiet abhängig gemacht werden: Beispielsweise kann zur erstmaligen Bildung der Differenzkurve als initiale Referenzkurve eine Auswertungskurve, die bei leerem Behälter, bei einer erstmaligen Füllstandsmessung im Behälter, oder in einer Kalibrier-Umgebung erstellt ist, implementiert werden.

In einer Weiterentwicklung des erfindungsgemäßen Verfahrens kann die Referenzkurve und/oder die Differenzkurve bzw. das eingetretene Kriterium und der zugehörige Ort und in einem Historienverlauf abgespeichert werden, sofern die Auswertungskurve für den anschließenden Messzyklus als neue Referenzkurve festgelegt wird. Das heißt, immer wenn innerhalb der Auswertungskurve das Kriterium neu erfüllt wird, wird die aktuelle Referenzkurve bzw. Differenzkurve, die im nächsten Messzyklus abgelöst werden wird, gespeichert. Somit kann bspw. zu Diagnosezwecken nachvollzogen werden, ob und wo das Kriterium eingetreten ist. Hierdurch lässt sich ableiten, ob und wann es zum Beispiel zu einem Echoverlust gekommen ist, oder wie schnell sich beispielsweise der Füllstand geändert hat.

Hierauf basierend kann das erfindungsgemäße Verfahren nochmals erweitert werden, indem der Historienverlauf mit einer Bildverarbeitungsmethode, insbesondere mit dem auf dem Deep Learning basierenden Faltungsnetzwerk, so analysiert wird, dass etwaige vorbekannte Änderungs-Muster des Kriteriums erkannt werden. Das jeweilige, typische Änderungs-Muster kann hierbei wiederum der entsprechenden Ursache, wie beispielsweise einem Befüll- oder Entleerungsvorgang, einem Rührvorgang, dem Kochen des Füllgutes oder Kondensatbildung zugeordnet werden. Außerdem kann bei Erkennung des jeweiligen Musters gegebenenfalls der der Füllstandswert verifiziert und bzw. korrigiert werden, so dass der Auswahlbereich gegebenenfalls entsprechend versetzt werden kann.

Analog zum erfindungsgemäßen Verfahren nach einer der zuvor genannten Ausführungsformen wird die Aufgabe, die der Erfindung zugrunde liegt, durch ein entsprechendes Radar-basiertes Füllstandsmessgerät gelöst. Hierzu umfasst das Füllstandsmessgerät folgende Komponenten:
- Eine Signalerzeugungs-Einheit, die ausgelegt ist, in aufeinanderfolgenden Messzyklen jeweils ein Mikrowellensignal in Richtung des Füllgutes auszusenden,
- eine Empfangseinheit, die konzipiert ist, um nach Reflektion des Mikrowellensignals im Inneren des Behälters das entsprechende Empfangssignal zu empfangen, und
- eine Auswertungseinheit, die ausgelegt ist, um
   ∘ anhand von zumindest dem Empfangssignal pro Messzyklus eine Auswertungskurve zu erstellen,
   ∘ anhand der Auswertungskurve in dem Auswahlbereich den Füllstand zu bestimmen,
   ∘ durch Subtraktion der Auswertungskurve und einer vordefinierten Referenzkurve eine Differenzkurve zu bilden,
   ∘ zu prüfen, ob die Differenzkurve an zumindest einem Ort das vordefinierte Kriterium erfüllt,
   ∘ den Auswahlbereich an dem Ort, an dem das Kriterium erfüllt ist, für den anschließenden Messzyklus neufestzusetzen, sofern die Differenzkurve an dem zumindest einen Ort das vordefinierte Kriterium erfüllt, und
   ∘ die Auswertungskurve für den anschließenden Messzyklus als neue Referenzkurve festzulegen, sofern die Differenzkurve an dem zumindest einen Ort das vordefinierte Kriterium erfüllt.

Vorzugsweise kann das Füllstandsmessgerät so ausgelegt werden, dass der Ort bzw. die Ausdehnung des Auswahlbereichs im Bedarfsfall durch einen Anlagen-Operator manuell konfigurierbar ist. Dies kann beispielsweise erforderlich sein, wenn der Füllstandswert nach einem Verlust des Füllstands-Echos in einem bekannten Bereich erwartet wird. Prinzipiell kann die Ausdehnung des Auswahlbereichs, sofern dieser nicht initial über den gesamten Messbereich definiert ist, bspw. mit 2 % bis 20 % des gesamten Messbereichs bemaßt werden, um den Suchbereich für das Füllstands-Maximum in der Auswertungskurve entsprechend einzugrenzen.

In Bezug zum Füllstandsmessgerät wird unter dem Begriff *"Einheit"* im Rahmen der Erfindung prinzipiell jede elektronische Schaltung verstanden, die für den jeweiligen Bestimmungszweck geeignet ausgelegt ist. Es kann sich also je nach Anforderung um eine Analogschaltung zur Erzeugung bzw. Verarbeitung entsprechender analoger Signale handeln. Es kann sich jedoch auch um eine (halbleiterbasierte) Digitalschaltung wie einem FPGA oder einen Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Füllstandsmessgerätes im Sinne der Erfindung potentiell auch auf einen gemeinsamen physikalischen Speicher zurückgreifen bzw. mittels derselben physikalischen Digitalschaltung betrieben werden.

Anhand der nachfolgenden Figuren wird die Erfindung näher erläutert. Es zeigt:
Fig. 1: Eine typische Anordnung eines Radar-basierten Füllstandsmessgerätes,
Fig. 2: schematische Darstellungen einer Auswertungskurve, einer Referenzkurve und einer Differenzkurve, und
Fig. 3: ein Blockschaltbild des erfindungsgemäßen Verfahrensablaufs.

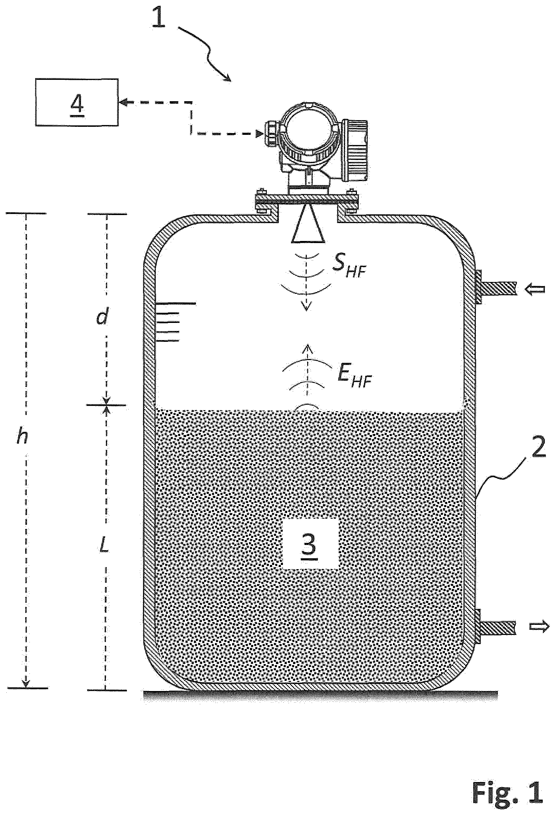

Zum grundsätzlichen Verständnis der Erfindung ist in Fig. 1 eine typische Anordnung eines frei abstrahlenden, Radar-basierten Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Dazu ist das Füllstandsmessgerät 1 oberhalb des maximal zulässigen Füllstands L am Behälter 2 angebracht. Je nach Einsatzgebiet kann die Einbauhöhe h des Füllstandsmessgerätes 1 über dem Behälterboden bis zu mehr als 100 m betragen.

In der Regel ist das Füllstandsmessgerät 1 über ein Bussystem, etwa "Ethernet", "PROFIBUS", "HART" oder "Wireless HART" mit einer übergeordneten Einheit 4, beispielsweise einem Prozessleitsystem oder einer dezentralen Datenbank verbunden.

Hierüber können zum einen Informationen über den Betriebszustand des Füllstandsmessgerätes 1 kommuniziert werden. Über das Bussystem können jedoch auch Informationen über den Füllstand L übermittelt werden, um gegebenenfalls am Behälter 2 vorhandene Zu- oder Abflüsse zu steuern.

Da das in Fig. 1 dargestellte Füllstandsmessgerät 1 als frei abstrahlendes Radar ausgelegt ist, umfasst es eine entsprechende Antenne. Dabei kann die Antenne, wie angedeutet, beispielswiese als Hornantenne ausgelegt sein. Insbesondere bei Radar-Frequenzen oberhalb von 100 GHz kann die Antenne auch als Planar-Antenne realisiert sein. Unabhängig von der Bauform ist die Antenne so ausgerichtet, dass entsprechende Mikrowellensignale S_{HF} in Richtung des Füllgutes 3 ausgesendet werden. Dabei werden die Mikrowellensignale S_{HF} je nach Messverfahren (Pulslaufzeit oder FMCW) in einer entsprechenden Signalerzeugungs-Einheit des Füllstandsmessgerätes 1 generiert.

An der Oberfläche des Füllgutes 3 werden die Mikrowellensignale S_{HF} reflektiert und nach einer korrespondierenden Signallaufzeit durch die Antenne bzw. eine nachgeschaltete Empfangseinheit des Füllstandsmessgerätes 1 als Empfangssignale E_{HF} empfangen. Der Füllstand L lässt sich aus den Empfangssignalen E_{HF} bestimmen, da die Signallaufzeit der Mikrowellensignale S_{HF}, E_{HF} von der Entfernung d = h - L des Füllstandsmessgerätes 1 zur Füllgut-Oberfläche abhängt.

Zur Bestimmung des Füllstandes L anhand des Empfangssignals E_{HF} erstellt eine hierfür ausgelegte Auswertungseinheit des Füllstandsmessgerätes 1 auf Basis des Empfangssignals E_{HF} eine Auswertungskurve ZF. Dabei bildet die Auswertungskurve ZF die Amplitude A des reflektierten Empfangssignals in Abhängigkeit der Messdistanz d bzw. der Signallaufzeit des Sendesignals S_{HF} /Empfangssignals E_{HF} wieder.

Bei Implementierung des FMCW-Verfahrens erstellt die Auswertungseinheit des Füllstandsmessgerätes 1 die Auswertungskurve ZF prinzipiell durch Mischen des momentan empfangenen Empfangssignals E_{HF} mit dem derzeit ausgesendeten Mikrowellensignal S_{HF}, wobei das Mikrowellensignal S_{HF} hierzu kontinuierlich mit sägezahnförmiger Frequenz-Änderung ausgesendet wird.

Im Fall des Pulslaufzeit-Verfahrens wird die Auswertungskurve ZF durch Unterabtastung des pulsförmigen Empfangssignals E_{HF} erstellt, wobei die Pulsfrequenz des Abtastsignals hierzu im Sub-Promillebereich von der Pulsfrequenz des Mikrowellensignals S_{HF} bzw. des Empfangssignals E_{HF} abweicht.

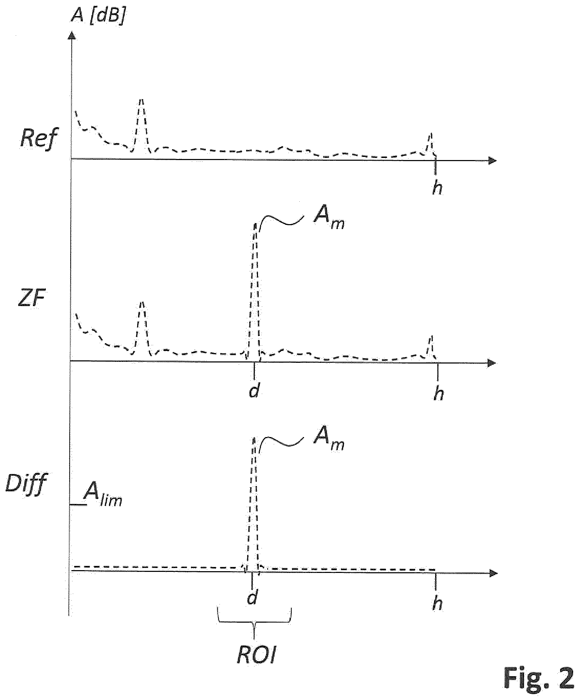

Sowohl bei FMCW, als auch beim Pulslaufzeit-Verfahren stellt die Auswertungskurve ZF die Signalamplitude A des Empfangssignals E_{HF} in Abhängigkeit der Messdistanz h wieder. Im Falle der frei abstrahlenden, Radar-basierten Füllstandsmessung erstreckt sich der korrespondierende Messbereich h dementsprechend von der Antenne des Füllstandsmessgerätes 1 bis zum Boden des Behälters 2. Eine schematische Auswertungskurve ZF ist in Fig. 2 dargestellt.

Aus der Auswertungskurve ZF bestimmt die Auswertungseinheit des Füllstandsmessgerätes 1 den Füllstand L. Hierzu wird der Ort d des Maximums Aₘ der Füllgut-Oberfläche ermittelt. Zur Suche des Maximums Aₘ kann jeglicher geeignete Algorithmus in der Auswertungseinheit implementiert sein.

Insbesondere bei Auftreten von nicht-statischen Störechos, die beispielsweise durch allmähliche Ansatzbildung im Behälter 2 entstehen, können neben dem Füllstands-Maximum Aₘ jedoch auch entsprechende weitere Maxima in der Auswertungskurve ZF erscheinen, die mittels konventioneller Filterung nicht erkennbar sind. Folglich kann dies zur Bestimmung eines falschen Füllstandswertes L führen, wenn ein Störecho durch das Füllstandsmessgerät 1 fälschlicherweise als Füllstands-Echo Aₘ interpretiert wird.

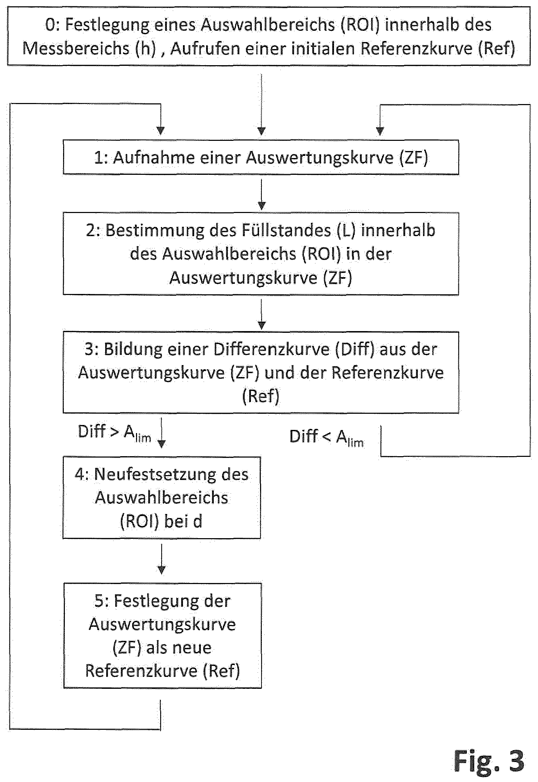

Das erfindungsgemäße Verfahren, mit dem auch solche Störechos unterdrückt werden können, wird daher anhand von Fig. 2 und Fig. 3 näher veranschaulicht: Das Verfahren basiert darauf, den Suchbereich des Füllstands-Echos in der Auswertungskurve auf einen Auswahlbereich ROI innerhalb des Messbereichs h einzugrenzen, um bestimmte Störechos auszuschließen und den Rechenaufwand für die Auswertungseinheit zu reduzieren. Hierzu beträgt die Ausdehnung des Auswahlbereichs ROI bspw. nur zwischen 2 % und 20 % des Messbereichs h.

Erfindungsgemäß wird zumindest die Lage des Auswahlbereichs ROI innerhalb des Messbereichs h durch den Ort d des Maximums Aₘ im vorhergehenden Messzyklus n verschoben, sofern es sich nicht um einen der ersten Messzyklen n handelt, in dem das Kriterium noch nicht erfüllt wurde, und sofern im vorhergehenden Messzyklus n das Maximum Aₘ detektiert wurde.

Damit auch im ersten Messzyklus n = 1 das Füllstands-Maximum Aₘ auffindbar ist, kann der Auswahlbereich ROI zu Beginn des ersten Messzyklus n = 1 einerseits über den gesamten Messbereich h definiert sein. Anderseits kann zum ersten Messzyklus n = 1 oder, wenn im vorigen Messzyklus n das Füllstands-Maximum Aₘ nicht auffindbar war, der Auswahlbereich ROI manuell an einen vorbestimmten Ort des Messbereichs h gesetzt werden. Wenn beispielsweise bekannt ist, dass der Behälter 2 anfänglich leer ist und sich darauffolgend füllt, kann der Auswahlbereich ROI dementsprechend an das Ende des Messbereichs h gelegt werden.

Um den Ort d des Maximums Aₘ für eine etwaige Neu-Positionierung des Auswahlbereichs ROI im nächsten Messzyklus n zu bestimmen, bildet die Auswertungseinheit des Füllstandsmessgerätes 1 anhand der im aktuellen Messzyklus n bestimmten Auswertungskurve ZF und einer definierten Referenzkurve Ref durch Differenzbildung eine Differenzkurve Diff. Dabei bedeutet Differenzbildung die Subtraktion der zwei Kurven Diff, Reff, bzw. der entsprechenden Datenpunkte, voneinander.

Im ersten Messzyklus bzw. zur erstmaligen Bildung der Differenzkurve Diff kann als Referenzkurve Ref eine Auswertungskurve ZF herangezogen werden, die bei leerem Behälter 2 aufgenommen wurde. Eine solche Referenzkurve Ref ohne entsprechendes Füllstands-Maximum Aₘ ist in Fig. 2 dargestellt. Die dortigen, peripheren Maxima können durch den Behälterboden oder durch Störkörper bedingt sein. Die erhöhte Amplitude am Anfang des Messbereichs h kann durch so genanntes "Klingeln" der Antenne hervorgerufen sein.

Alternativ kann zur erstmaligen Bildung der Differenzkurve Diff als Referenzkurve Ref außerdem eine Auswertungskurve ZF, die auf einer erstmaligen Füllstandsmessung im Behälter 2 oder auf einer Messung in einer Kalibrier-Umgebung basiert, herangezogen werden. Eine Kalibrier-Umgebung kann bspw. durch einen Messraum gegeben sein, in dem das Mikrowellensignal S_{HF} komplett absorbiert wird.

Um den Ort d des Maximums Aₘ zu finden, prüft die Auswertungseinheit die Differenzkurve Diff innerhalb des Auswahlbereichs ROI erfindungsgemäß auf ein vordefiniertes Kriterium hin. Dabei kann das Kriterium auf verschiedene Weisen definiert werden, bspw. als Überschreitung einer vordefinierten Mindest-Amplitude Aₗᵢₘ, wie es in Fig. 2 schematisch dargestellt ist. Alternativ kann jedoch auch eine Mindest-Steigung der Differenzkurve Diff oder eine Mindest-Fläche unter der Differenzkurve Diff als zu prüfendes Kriterium implementiert werden. Wird das Kriterium im aktuellen Messzyklus n an einem bestimmten Ort d in der Differenzkurve erfüllt, beispielsweise weil dort die Mindest-Amplitude Aₗᵢₘ überschritten wird, so wird der Auswahlbereich ROI für den darauffolgenden Messzyklus an diesem Ort d positioniert. Außerdem wird für den anschließenden Messzyklus n die aktuelle Auswertungskurve ZF als neue Referenzkurve Ref definiert.

Wenn das Kriterium im aktuellen Messzyklus n in der zugrundeliegenden Differenzkurve Diff jedoch nicht erfüllt wird, so wird der Auswahlbereich ROI im darauffolgenden Messzyklus n an diesem Ort d belassen. Auch die Referenzkurve Ref wird in diesem Fall für den darauffolgenden Messzyklus nicht abgeändert.

Durch das etwaige Anpassen der Auswertungskurve ZF als neue Referenzkurve Ref werden auch schleichende Änderungen bezüglich möglicher Störechos in der Differenzkurve Diff mitberücksichtigt. Gleichzeitig wird der Rechenaufwand zur Suche des Füllstands-Maximums Aₘ geringgehalten, da der Auswahlbereich ROI zur Suche des Füllstands-Maximums Aₗᵢₘ mitverschoben wird. Insgesamt wird durch das erfindungsgemäße Verfahren somit die Sicherheit der Füllstandsmessung potentiell erhöht.

### Bezugszeichenliste

- 1: Füllstandsmessgerät
- 2: Behälter
- 3: Füllgut
- 4: Übergeordnete Einheit
- Aₗᵢₘ: Mindest-Amplitude
- Aₘ: Amplitude des Füllstands-Maximums
- d: Ort
- Diff: Differenzkurve
- E_{HF}: Empfangssignale
- h: Einbauhöhe bzw. Messbereich
- L: Füllstand
- n: Messzyklus
- Ref: Referenzkurve
- ROI: Auswahlbereich
- S_{HF}: Mikrowellensignale
- ZF: Auswertungskurve

## Patentansprüche

1. Verfahren zur Radar-basierten Messung eines Füllstandes (L) eines Füllgutes (3), welches innerhalb eines Messbereichs (h) in einem Behälter (2) vorliegt, wobei innerhalb des Messbereichs (h) ein initialer Auswahlbereich (ROI) definiert ist, und wobei das Verfahren folgende Verfahrensschritte, die in aufeinanderfolgenden Messzyklen (n) wiederholt werden, umfasst:
- Aussenden eines Mikrowellensignals (S_{HF}) in Richtung des Füllgutes (3),
- Empfang eines Empfangssignals (E_{HF}) nach Reflektion des Mikrowellensignals (S_{HF}) im Inneren des Behälters (2),
- Erstellung einer Auswertungskurve (ZF) anhand von zumindest dem Empfangssignal (E_{HF}),
- Bildung einer Differenzkurve (Diff) anhand der Auswertungskurve (ZF) und einer vordefinierten Referenzkurve (Ref),
- Bestimmung des Füllstandes (L) anhand der Auswertungskurve (ZF) oder anhand der Differenzkurve (Diff) innerhalb des Auswahlbereichs (ROI),
- Prüfen, ob die Differenzkurve (Diff) an zumindest einem Ort (d) ein vordefiniertes Kriterium erfüllt,
- Neufestsetzung des Auswahlbereichs (ROI) an dem Ort (d), an dem das Kriterium erfüllt ist, für den anschließenden Messzyklus (n), sofern die Differenzkurve (Diff) an dem zumindest einen Ort (d) das vordefinierte Kriterium erfüllt, und
- Festlegung der Auswertungskurve (ZF) als neue Referenzkurve (Ref) für den anschließenden Messzyklus (n), sofern die Differenzkurve (Diff) an dem zumindest einen Ort (d) das vordefinierte Kriterium erfüllt.

2. Verfahren nach Anspruch 1, wobei als initialer Auswahlbereich (ROI) der gesamte Messbereich (h) definiert ist.

3. Verfahren nach einem der vorhergehenden Ansprüche, wobei das Überschreiten einer vordefinierten Mindest-Amplitude (Aₗᵢₘ), einer Mindest-Steigung oder einer Mindest-Fläche unter bzw. in der Differenzkurve (Diff) als Kriterium, auf das die Differenzkurve (Diff) geprüft wird, herangezogen wird.

4. Verfahren nach einem der vorhergehenden Ansprüche, wobei zur erstmaligen Bildung der Differenzkurve (Diff) als Referenzkurve (Ref) eine Auswertungskurve (ZF), die bei leerem Behälter (2), bei einer erstmaligen Füllstandsmessung im Behälter (2), oder in einer Kalibrier-Umgebung erstellt ist, verwendet wird.

5. Verfahren nach einem der vorhergehenden Ansprüche, wobei die Referenzkurve (Ref) und/oder die Differenzkurve (Diff) bzw. der Ort (d) und das zugehörige, eingetretene Kriterium in einem Historienverlauf abgespeichert werden/wird, sofern die Auswertungskurve (ZF) für den anschließenden Messzyklus (n) als neue Referenzkurve (Ref) festgelegt wird.

6. Verfahren nach Anspruch 5, wobei der Historienverlauf mit einer Bildverarbeitungsmethode, insbesondere mit dem auf dem Deep Learning basierenden Faltungsnetzwerk, derart analysiert wird, um etwaige vorbekannte Änderungs-Muster des Kriteriums zu erkennen.

7. Radar-basiertes Füllstandsmessgerät, ausgeführt zur Durchführung des Verfahrens nach einem der vorhergehenden Ansprüche, folgende Komponenten umfassend:
- Eine Signalerzeugungs-Einheit, die ausgelegt ist, in aufeinanderfolgenden Messzyklen (n) jeweils ein Mikrowellensignal (S_{HF}) in Richtung des Füllgutes (3) auszusenden,
- eine Empfangseinheit, die konzipiert ist, um nach Reflektion des Mikrowellensignals (S_{HF}) im Inneren des Behälters (2) das entsprechende Empfangssignal (E_{HF}) zu empfangen,
- eine Auswertungseinheit, die ausgelegt ist, um
∘ anhand von zumindest dem Empfangssignal (E_{HF}) pro Messzyklus (n) eine Auswertungskurve (ZF) zu erstellen,
∘ anhand der Auswertungskurve (ZF) in dem Auswahlbereich (ROI) den Füllstand (L) zu bestimmen,
∘ durch Subtraktion der Auswertungskurve (ZF) und einer vordefinierten Referenzkurve (Ref) eine Differenzkurve (Diff) zu bilden,
∘ zu prüfen, ob die Differenzkurve (Diff) an zumindest einem Ort (d) das vordefinierte Kriterium erfüllt,
∘ den Auswahlbereich (ROI) an dem Ort (d), an dem das Kriterium erfüllt ist, für den anschließenden Messzyklus (n) neufestzusetzen, sofern die Differenzkurve (Diff) an dem zumindest einen Ort (d) das vordefinierte Kriterium erfüllt, und
∘ die Auswertungskurve (ZF) für den anschließenden Messzyklus (n) als neue Referenzkurve (Ref) festzulegen, sofern die Differenzkurve (Diff) an dem zumindest einen Ort (d) das vordefinierte Kriterium erfüllt.

8. Füllstandsmessgerät nach Anspruch 7, wobei der Ort (d) bzw. die Ausdehnung des Auswahlbereichs (ROI) manuell konfigurierbar ist.

## Claims

1. Procedure for the radar-based measurement of a level (L) of a medium (3), wherein said medium is located within a measuring range (h) in a vessel (2), wherein an initial selection area (ROI) is defined within the measuring range (h), and wherein said procedure comprises the following procedural steps which are repeated in consecutive measuring cycles (n):
- Transmission of a microwave signal (S_{HF}) in the direction of the medium (3),
- Reception of a reception signal (E_{HF}) following the reflection of the microwave signal (S_{HF}) inside the vessel (2),
- Creation of an evaluation curve (ZF) using at least the reception signal (E_{HF}),
- Formation of a differential curve (Diff) using the evaluation curve (ZF) and a predefined reference curve (Ref),
- Determination of the level (L) within the selection area (ROI) using the evaluation curve (ZF) or using the differential curve (Diff),
- Check of whether the differential curve (Diff) satisfies a predefined criterion at least at one point (d),
- Redefinition of the selection area (ROI) at the point (d) where the criterion is satisfied, for the subsequent measuring cycle (n), provided that the differential curve (Diff) satisfies the predefined criterion at the at least one point (d), and
- Setting of the evaluation curve (ZF) as the new reference curve (Ref) for the subsequent measuring cycle (n) provided that the differential curve (Diff) satisfies the predefined criterion at the at least one point (d).

2. Procedure as claimed in Claim 1, wherein the entire measuring range (h) is defined as the initial selection area (ROI).

3. Procedure as claimed in one of the previous claims, wherein the overshooting of a predefined minimum amplitude (Aₗᵢₘ), a minimum slope or a minimum area below or in the differential curve (Diff) is used as a criterion on the basis of which the differential curve (Diff) is checked.

4. Procedure as claimed in one of the previous claims, wherein an evaluation curve (ZF) that is created when the vessel (2) is empty, during an initial level measurement in the vessel (2), or in a calibration environment is used as a reference curve (Ref) for the initial formation of the differential curve (Diff).

5. Procedure as claimed in one of the previous claims, wherein the reference curve (Ref) and/or the differential curve (Diff) or the point (d) and the associated criterion that occurs is/are saved in a history provided that the evaluation curve (ZF) is defined as a new reference curve (Ref) for the subsequent measuring cycle (n).

6. Procedure as claimed in Claim 5, wherein the history is analyzed by an image processing method, particularly by a deep-learning based convolutional network, in such a way as to identify any previously known change patterns of the criterion.

7. Radar-based level transmitter, which is designed to perform the procedure as claimed in one of the previous claims, wherein said transmitter comprises the following components:
- a signal generation unit, which is designed to transmit a microwave signal (S_{HF}) in the direction of the medium (3) in consecutive measuring cycles (n),
- a reception unit, which is designed to receive the corresponding reception signal (E_{HF}) following the reflection of the microwave signal (S_{HF}) inside the vessel (2),
- an evaluation unit, which is designed to
∘ create an evaluation curve (ZF) per measuring cycle (n) using at least the reception signal (EHF),
∘ determine the level (L) in the selection area (ROI) using the evaluation curve (ZF),
∘ form a differential curve (Diff) by subtracting the evaluation curve (ZF) and a predefined reference curve (Ref),
∘ check whether the differential curve (Diff) satisfies the predefined criterion at the at least one point (d)
∘ redefine the selection area (ROI) at the point (d) where the criterion is satisfied for the subsequent measuring cycle (n) provided that the differential curve (Diff) satisfies the predefined criterion at the at least one point (d), and
∘ set the evaluation curve (ZF) as the new reference curve (Ref) for the subsequent measuring cycle (n) provided that the differential curve (Diff) satisfies the predefined criterion at the at least one point (d).

8. Level transmitter as claimed in Claim 7, wherein the point (d) or the extension of the selection area (ROI) can be configured manually.

## Revendications

1. Procédé destiné à la mesure basée sur un radar d'un niveau (L) d'un produit (3), lequel produit est présent dans un réservoir (2), une zone de sélection initiale (ROI) étant définie à l'intérieur de la gamme de mesure (h), et le procédé comprenant les étapes de procédé suivantes, lesquelles étapes sont répétées dans des cycles de mesure (n) consécutifs :
- Émission d'un signal hyperfréquence (S_{HF}) en direction du produit (3),
- Réception d'un signal de réception (E_{HF}) après réflexion du signal hyperfréquence (S_{HF}) à l'intérieur du réservoir (2),
- Création d'une courbe d'évaluation (ZF) à l'aide au moins du signal de réception (E_{HF}),
- Formation d'une courbe de différence (Diff) à l'aide de la courbe d'évaluation (ZF) et d'une courbe de référence prédéfinie (Ref),
- Détermination du niveau (L) à l'aide de la courbe d'évaluation (ZF) ou à l'aide de la courbe différentielle (Diff) à l'intérieur de la zone de sélection (ROI),
- Vérification si la courbe différentielle (Diff) remplit un critère prédéfini à au moins un endroit (d),
- Redéfinition de la zone de sélection (ROI) à l'endroit (d) où le critère est satisfait, pour le cycle de mesure suivant (n), dans la mesure où la courbe de différence (Diff) à l'au moins un endroit (d) satisfait au critère prédéfini, et
- Détermination de la courbe d'évaluation (ZF) comme nouvelle courbe de référence (Ref) pour le cycle de mesure suivant (n), dans la mesure où la courbe de différence (Diff) à l'au moins un endroit (d) satisfait au critère prédéfini.

2. Procédé selon la revendication 1, pour lequel l'ensemble de la gamme de mesure (h) est défini comme zone de sélection initiale (ROI).

3. Procédé selon l'une des revendications précédentes, pour lequel le dépassement d'une amplitude minimale prédéfinie (Aₗᵢₘ), d'une pente minimale ou d'une surface minimale sous ou dans la courbe de différence (Diff) est utilisé comme critère sur la base duquel la courbe de différence (Diff) est contrôlée.

4. Procédé selon l'une des revendications précédentes, pour lequel, pour la formation initiale de la courbe différentielle (Diff), on utilise comme courbe de référence (Ref) une courbe d'évaluation (ZF) qui est créée lorsque le réservoir (2) est vide, lors d'une première mesure de niveau dans le réservoir (2), ou dans un environnement d'étalonnage.

5. Procédé selon l'une des revendications précédentes, pour lequel la courbe de référence (Ref) et/ou la courbe de différence (Diff) ou le lieu (d) et le critère associé qui s'est produit est/sont mémorisés dans un historique, dans la mesure où la courbe d'évaluation (ZF) est définie comme nouvelle courbe de référence (Ref) pour le cycle de mesure (n) suivant.

6. Procédé selon la revendication 5, pour lequel l'historique est analysé par une méthode de traitement d'image, notamment par le réseau convolutif basé sur l'apprentissage profond, de manière à identifier d'éventuels modèles de modification du critère connus au préalable.

7. Transmetteur de niveau basé sur un radar, lequel transmetteur est réalisé pour la mise en oeuvre du procédé selon l'une des revendications précédentes, lequel transmetteur comprend les composants suivants :
- une unité de génération de signal, laquelle est conçue pour émettre un signal micro-ondes (S_{HF}) en direction du produit (3) dans des cycles de mesure (n) consécutifs,
- une unité de réception, laquelle est conçue pour recevoir, après réflexion du signal hyperfréquence (S_{HF}) à l'intérieur du réservoir (2), le signal de réception (E_{HF}) correspondant,
- une unité d'évaluation, laquelle est conçue pour
∘ établir une courbe d'évaluation (ZF) à l'aide d'au moins le signal de réception (E_{HF}) par cycle de mesure (n),
∘ déterminer le niveau (L) à l'aide de la courbe d'évaluation (ZF) dans la zone de sélection (ROI),
∘ former une courbe de différence (Diff) par soustraction de la courbe d'évaluation (ZF) et d'une courbe de référence prédéfinie (Ref),
∘ redéfinir la zone de sélection (ROI) à l'endroit (d) où le critère est rempli, pour le cycle de mesure (n) suivant, dans la mesure où la courbe de différence (Diff) à l'au moins un endroit (d) satisfait au critère prédéfini, et
∘ fixer la courbe d'évaluation (ZF) pour le cycle de mesure suivant (n) en tant que nouvelle courbe de référence (Ref), dans la mesure où la courbe de différence (Diff) à l'au moins un endroit (d) satisfait au critère prédéfini.

8. Transmetteur de niveau selon la revendication 7, pour lequel l'emplacement (d) ou l'étendue de la zone de sélection (ROI) peut être configuré manuellement.
